(19) Europäisches Patentamt
European Patent Office
Office européen des brevets

(11) Veröffentlichungsnummer: **0 415 175 A2**

# (12) EUROPÄISCHE PATENTANMELDUNG

(21) Anmeldenummer: **90115566.3**

(51) Int. Cl.[5]: **C08G 18/30**, G03F 7/039

(22) Anmeldetag: **14.08.90**

Die Bezeichnung der Erfindung wurde geändert (Richtlinien für die Prüfung im EPA, A-III, 7.3).

(30) Priorität: **22.08.89 DE 3927631**

(43) Veröffentlichungstag der Anmeldung: **06.03.91 Patentblatt 91/10**

(84) Benannte Vertragsstaaten: **AT BE CH DE DK ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Seitz, Friedrich, Dr.**
**Von Wieser-Strasse 1**
**W-6701 Friedelsheim(DE)**
Erfinder: **Beck, Erich, Dr.**
**Konrad-Adenauer Strasse 15**
**W-6721 Harthausen(DE)**
Erfinder: **Roser, Joachim, Dr.**
**Saarlandstrasse 40**
**W-6700 Ludwigshafen(DE)**
Erfinder: **Schulz, Günther, Dr.**
**Im Roehrich 45**
**W-6702 Bad Duerkheim(DE)**
Erfinder: **Bueschges, Eleonore, Dr.**
**Schauinslandstrasse 9**
**W-6800 Mannheim 1(DE)**
Erfinder: **Zwez, Thomas, Dr.**
**Allmendstrasse 8**
**W-7500 Karlsruhe 51(DE)**

## (54) Harnstoff- und Carboxylgruppen enthaltendes Umsetzungsprodukt, Verfahren zu dessen Herstellung und damit herstellbares strahlungsempfindliches Gemisch.

(57) Die Erfindung betrifft neue Harnstoff- und Carboxylgruppen enthaltende Umsetzungsprodukte, die durch Umsetzung von

i) einem Di- oder Polyisocyanat
mit
ii) mindestens einer Aminoverbindung
und
iii) mindestens einem Säureanhydrid einer mindestens zweiwertigen Carbonsäure,
sowie gegebenenfalls
iv) einer von Komponente ii) verschiedenen Verbindung mit Hydroxyl- oder Aminogruppe, wobei die Summe der NCO- und Anhydridgruppen in i) und iii) kleiner oder gleich der Zahl der damit reaktiven Gruppen in ii) und iv) ist,
erhalten worden ist.

Dieses Umsetzungsprodukt eignet sich zur Herstellung strahlungsempfindlicher Zusammensetzungen, insbesondere solcher Zusammensetzungen, deren Löslichkeit in Nasser oder wäßrig-alkalischer Lösung durch Bestrahlung zunimmt.

EP 0 415 175 A2

# UMSETZUNGSPRODUKT, VERFAHREN ZU DESSEN HERSTELLUNG UND DAMIT HERSTELLBARES STRAHLUNGSEMPFINDLICHES GEMISCH

Die Erfindung betrifft neue, Harnstoff- und Carboxylgruppen enthaltende Umsetzungsprodukte, Verfahren zu deren Herstellung sowie strahlungsempfindliche Gemische, die diese Umsetzungsprodukte neben polymerisierbaren ethylenisch ungesättigten Verbindungen und gegebenenfalls einem bei Bestrahlung mit aktinischem Licht Radikale erzeugenden Initiatorsystem enthalten. Insbesondere betrifft die Erfindung solche strahlungsempfindlichen Gemische, die bei Bestrahlung in Wasser oder wäßrig-alkalischen Lösungen löslich werden.

Positiv arbeitende lichtempfindliche Zusammensetzungen, d.h. Verbindungen oder Gemische von Verbindungen, deren Löslichkeit in einem vorgegebenen Lösungsmittel bei Bestrahlung zunimmt, sind an sich bekannt. Die in der Reproduktionstechnik am häufigsten eingesetzten Verbindungen sind Naphthochinondiazide oder deren Derivate (vgl. W. Fraß, Chemie in unserer Zeit, 17 (1983) 10; H. W. Vollmann, Angew. Chem. 92 (1980) 95). Bei Bestrahlung dieser Verbindungen wird über Stickstoffabspaltung und Wolff-Umlagerung aus einer hydrophoben Diazoketon-Einheit eine Carboxylgruppe gebildet, die die genannten Verbindungen bzw. die aus diesen Verbindungen hergestellten Mischungen in wäßrig-alkalischen Lösungen löslich macht.

Eine weitere Verbindungsklasse, die sich zur Herstellung von positiv arbeitenden lichtempfindlichen Gemischen eignet, sind aromatische oder heteroaromatische Nitroverbindungen. Während die oben beschriebenen Verbindungen mit Diazoketon-Struktur in den lichtempfindlichen Gemischen meist als niedermolekulare Verbindungen vorliegen, können als lichtempfindliche Nitroverbindungen sowohl niedermolekulare Verbindungen (DE-A-22 07 574, US-A-4 181 531) als auch Polymere aus Monomeren mit o-Nitrocarbinolester-Struktur bzw. Copolymere dieser Monomeren mit anderen Vinylverbindungen verwendet werden (vgl. DE-A-21 50 691, DE-A-29 22 746 und EP-A-19 770). Auch hier wird bei Bestrahlung eine Carboxylgruppe gebildet, die die Löslichkeit der Gemische in wäßrig-alkalischen Lösungen erhöht.

Auf einem ähnlichen Prinzip dürften die Positivsysteme beruhen, die z. B. in US-A-4 469 774 beschrieben sind und photochemisch spaltbare Benzoinester in der Seitenkette enthalten.

Ein weiteres Verfahren, das auf der Erhöhung der Löslichkeit durch Carboxylgruppen beruht, ist zum Beispiel in EP-A-62 474, EP-A-99 949 oder US-A-4 415 652 beschrieben. Hier wird ein Gemisch aus einem in wäßriger Lösung unlöslichen Bindemittel, einer Mercaptocarbonsäure und einem bei Bestrahlung Radikale bildenden Initiatorsystem beschrieben. Die Bestrahlung führt zu einer radikalischen Pfropfung der Mercaptocarbonsäure auf das Bindemittel, das dadurch in wäßrig-alkalischen Lösungen löslich wird.

Bei photoempfindlichen Mischungen, die nach einem der oben beschriebenen Prinzipien aufgebaut sind, wird pro absorbiertem Lichtquant nur maximal eine Carboxylgruppe erzeugt bzw. auf das Bindemittel gepfropft. Meist liegt die Quantenausbeute noch deutlich unter 1. Daher sind in allen Fällen lange Belichtungszeiten erforderlich, die erreichte Löslichkeitsdifferenzierung ist dennoch meist schlecht. Von den genannten photoempfindlichen Systemen konnten sich daher nur die auf der Basis der Wolff-Umlagerung von Diazoketonen funktionierenden auf dem Markt behaupten, und auch diese nur im Bereich der Positiv-Offset-Platten bzw. der Positivresiste für die Herstellung integrierter Schaltungen. Für andere Produkte, von denen insbesondere Photoresistfilme für die Leiterplattenfertigung genannt seien, sind die erforderlichen langen Belichtungszeiten und die wegen der geringen Löslichkeitsdifferenzierung erforderlichen halbwäßrigen Entwicklerlösungen unakzeptabel. Das Problem der Entsorgung der Entwicklerlösungen wird in Zukunft noch an Bedeutung gewinnen.

Eine prinzipiell andere Möglichkeit, die Löslichkeit einer photoempfindlichen Schicht durch Belichtung zu erhöhen, besteht darin, die Zusammensetzung der Schicht so zu wählen, daß bei Bestrahlung das mittlere Molekulargewicht des Bindemittels abnimmt. Hierzu werden durch aktinisches Licht spaltbare Gruppen in die Hauptkette eines Polymeren eingebaut. Beispiele für solche Systeme sind z.B. Polyoxymethylen-Polymere, die in der Hauptkette Acetaleinheiten, die aus o-Nitrobenzaldehyd oder Derivaten des o-Nitrobenzaldehyds gebildet sind, enthalten. Solche Polymere und aus ihnen hergestellte lichtempfindliche Schichten sind z.B. in US-A-3 991 033 und US-A-4 189 611 beschrieben. Auf ähnliche Weise können Acetale des o-Nitrobenzaldehyds auch in die Hauptkette von Polymeren eingebaut werden, die im wesentlichen einen Polyester aus einer Dicarbonsäure und einem difunktionellen Alkohol darstellen (vgl. US-A-4 086 210). Andere Polymere, die bei Bestrahlung unter Spaltung der Hauptkette und damit einer Verringerung des Molekulargewichts reagieren, sind Polymere, die in ihrer Hauptkette Hexaarylbisimidazoleinheiten enthalten (vgl. US-A-4 009 040).

Als eine Kombination aus Hauptkettenabbau und Pfropfung einer Carboxylgruppe läßt sich das in EP-A-57 162 beschriebene Verfahren verstehen,

in dem neben einem Polymeren, das in der Hauptkette Benzoineinheiten enthält, ungesättigte Carbonsäuren vorliegen. Bei Belichtung werden die Benzoineinheiten unter Verringerung des mittleren Molekulargewichts gespalten. Gleichzeitig werden die ungesättigten Carbonsäuren an die an den Spaltstellen entstehenden Radikale addiert und erhöhen so ebenfalls die Löslichkeit in wäßrig-alkalischer Lösung.

Auch die auf dem Hauptkettenabbau eines geeigneten Polymeren nach einem der oben beschriebenen Prinzipien basierenden positiv arbeitenden photoempfindlichen Schichten weisen nur eine geringe Lichtempfindlichkeit auf. Zudem ist in vielen Fällen nach der Belichtung eine thermische Nachbehandlung nötig. In der Praxis konnte sich daher keines der beschriebenen Verfahren durchsetzen.

Man hat daher versucht, die hohe Lichtempfindlichkeit photopolymerisierbarer Schichten für die Herstellung positiv arbeitender Schichten zu nutzen, indem man durch Belichtung durch eine Vorlage bildmäßig einen Inhibitor der Polymerisation erzeugt und dann in einem zweiten, nicht notwendigerweise bildmäßigen Belichtungsschritt die nicht inhibierten Stellen polymerisiert. Als Verbindungen, aus denen durch Belichtung Polymerisationsinhibitoren erzeugt werden können, wurden z.B. Nitrosodimere (vgl. DE-A-25 42 151) oder gewisse o-Nitroaromaten vorgeschlagen (vgl. DE-A-27 10 417 und EP-A-103 197). Sei diesen Verfahren ist in jedem Fall ein zusätzlicher Belichtungsschritt nötig, so daß die Gesamtprozeßzeit gegenüber anderen Positivsystemen eher erhöht wird.

Der bisher erfolgreichste Versuch, die Lichtempfindlichkeit positiv arbeitender lichtempfindlicher Schichten zu erhöhen, ist unter dem Begriff der chemischen Verstärkung bekannt geworden. Hier wird bei Belichtung ein Katalysator erzeugt, der in einem zweiten, thermischen Verfahrensschritt eine Reaktion beschleunigt, die letztlich zu einer Erhöhung der Löslichkeit der photoempfindlichen Schicht führt. Bei dem Katalysator handelt es sich meist um eine starke Säure, die photochemisch z.B. aus einer organischen Halogenverbindung, vor allem einer halogenhaltigen Triazinverbindung (vgl. z.B. DE-A-23 06 248), einer aromatischen Nitroverbindung (vgl. z.B. EP-A-78 981), einem Diazoniumsalz oder einem aromatischen Iodonium- bzw. Sulfoniumsalz (vgl. z.B. DE-A-36 20 677 und US-A-4 491 628) gebildet wird. Die gebildete Säure wird benutzt, um im zweiten, thermischen Verfahrensschritt säurelabile Bindungen zu spalten. Je nach verwendeter säurelabiler Verbindung kann diese Spaltung entweder die Bildung einer hydrophilen aus einer hydro phoben Gruppe (vgl. z. B. DE-A-36 20 677 und US-A-4 491 628) oder einen Abbau des Molekulargewichts bewirken. Für den letzten Fall geeignete säurelabile Gruppen sind z. B. Acetal- (vgl. DE-A-23 06 248, EP-A-78 981, EP-A-82 463 und US-A-3 779 778), Orthocarbonsäureester- (vgl. EP-A-78 981 und EP-A-82 463), Enolether- (vgl. EP-A-6 627 und EP-A-82 463), Silylether- (vgl. DE-A-35 44 165 und EP-A-130 599) oder Silylestergruppen (vgl. EP-A-130 599). Obwohl mit diesen Gemischen Lichtempfindlichkeiten erreicht werden können, die in günstigen Fällen denen negativ arbeitender Schichten entsprechen, haben Produkte, die nach dem Prinzip der chemischen Verstärkung aufgebaut sind, nur im Bereich der Resiste für die Herstellung integrierter Schaltungen Bedeutung erlangt. In anderen Einsatzgebieten wird der erforderliche zusätzliche thermische Verfahrensschritt nicht akzeptiert.

Ein weiterer Typ eines positiv arbeitenden lichtempfindlichen Gemisches wird in EP-A-106 156 beschrieben. Dieses Gemisch besteht aus einem Polykondensat mit bestimmten Gruppen in der Hauptkette und ungesättigten Gruppen am Kettenende in Kombination mit einem Photoinitiator. Als die Hauptkette aufbauende Gruppen werden aromatische Kohlenwasserstoff-, Diarylether-, Diarylsulfid-, Diarylsulfon-, Diarylamin-, Diarylketon- und Diaryldiketongruppen genannt. Endgruppen sind Alkenylgruppen oder Reste ungesättigter Carbonsäuren. Als Ursache für die Erhöhung der Löslichkeit bei Belichtung wird ein radikalisch induzierter Kettenabbau vermutet. Trotz eines sehr hohen Initiatoranteils von typischerweise 25 Gew.% werden nur mäßige Lichtempfindlichkeiten erreicht.

Die aufgeführten Beispiele zeigen, daß für die meisten Anwendungszwecke noch immer ein Bedarf an neuen positiv arbeitenden lichtempfindlichen Gemischen besteht, die hohe Lichtempfindlichkeit und einfache Handhabung, d.h. insbesondere keine zusätzlichen Verfahrensschritte, miteinander kombinieren. Aufgabe der vorliegenden Erfindung war es, ein positiv arbeitendes lichtempfindliches Gemisch mit den genannten Eigenschaften zu entwickeln sowie das ihm zugrundeliegende Umsetzungsprodukt aufzuzeigen.

Überraschenderweise wurde gefunden, daß die Löslichkeit von Gemischen bestimmter Carboxylgruppen sowie Harnstoffgruppen enthaltender Umsetzungsprodukte mit ethylenisch ungesättigten Verbindungen bei Belichtung in Gegenwart von Verbindungen, aus denen bei Belichtung Radikale entstehen, zunimmt.

Gegenstand der vorliegenden Erfindung ist ein Harnstoff- und Carboxylgruppen enthaltendes Umsetzungsprodukt, das dadurch gekennzeichnet ist, daß es durch Umsetzung von

i) mindestens einem Di- oder Polyisocyanat,
mit
ii) mindestens einer Aminoverbindung der allgemeinen Formel (I)

$R'HN-R-XH$ (I),

wobei

R den zweiwertigen Rest eines, gegebenenfalls substituierten, Alkans, Arens, Ethers, Polyethers, Amins, Polyamins, Esters, Polyesters, Amids oder Polyamids,

$R'$ Wasserstoff, Alkyl, Aryl, Aralkyl, Hydroxyalkyl, Aminoalkyl, Mercaptoalkyl, Derivate derselben oder den einwertigen Rest

$H\{O-(CH_2)_n-CHR''\}_m$

mit n = 1 bis 3, m = 1 bis 10 oder Isomeren desselben und $R''$ = H oder $C_1$- bis $C_4$-Alkyl

X O, S oder $NR'''$,

$R'''$ Wasserstoff, Alkyl, Aryl, Aralkyl, Hydroxyalkyl, Aminoalkyl, Mercaptoalkyl oder Derivate derselben

bedeuten, und/oder

mindestens einer Aminoverbindung der allgemeinen Formel (II)

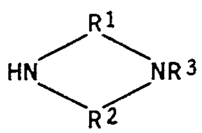

(II),

wobei

$R^1$ und $R^2$ untereinander gleich oder verschieden sind und den zweiwertigen Rest eines, gegebenenfalls substituierten, Alkans, Arens, Ethers, Polyethers, Amins, Polyamins, Esters, Polyesters, Amids oder Polyamids bedeuten,

$R^3$ Wasserstoff, Alkyl, Aryl, Aralkyl, Hydroxyalkyl, Aminoalkyl, Mercaptoalkyl oder Derivate derselben bedeutet,

und iii) mindestens einem Säureanhydrid einer mindestens zweiwertigen Carbonsäure,

sowie gegebenenfalls iv) einer von Komponente ii) verschiedenen organischen Verbindung mit mindestens einer Hydroxylgruppe oder Aminogruppe, wobei die Aminogruppe am Stickstoff mindestens einen Wasserstoff trägt, mit der Maßgabe, daß die Summe der Anzahl der NCO- und Anhydridgruppen in i) und iii) kleiner oder gleich der Anzahl der damit reaktiven Gruppen in ii) und iv) ist und für den Fall, daß in der allgemeinen Formel (I) der Komponente ii) X für O steht, mindestens eine Verbindung der Komponente iv) mitverwendet wird,

erhalten worden ist.

Dieses Harnstoff- und Carboxylgruppen enthaltende Umsetzungsprodukt eignet sich als Rohstoff für strahlungsempfindliche Gemische. Speziell eignet es sich zur Herstellung von Filmen, deren Löslichkeit in wäßrigen Lösungen nach Belichtung zunimmt.

Besondere Ausführungsformen der Erfindung bestehen darin, daß man zur Herstellung des erfindungsgemäßen Umsetzungsproduktes als Komponente i) ein Diisocyanat, als Komponente ii) ein oder mehrere Hydroxyalkylamine sowie als Komponente iii) ein zyklisches Carbonsäureanhydrid einsetzt.

Als Komponente iv) kommen insbesondere Monoalkohole sowie primäre und sekundäre Monoamine in Betracht.

Gegenstand der vorliegenden Erfindung sind auch drei Verfahrensvarianten zur Herstellung der erfindungsgemäßen Umsetzungsprodukte, wobei entweder in einer ersten Stufe ein oder mehrere Di- oder Polyisocyanate i) mit mindestens einer Aminoverbindung ii) und gegebenenfalls gleichzeitig mit einer Verbindung mit mindestens einer Hydroxylgruppe oder Aminogruppe iv) zu einer mit Anhydridgruppen reaktionsfähigen Harnstoffverbindung umgesetzt werden, die in einer zweiten Stufe mit mindestens einem Säureanhydrid iii) zu einer sauer funktionalisierten Harnstoffverbindung umgesetzt wird; oder in einer ersten Stufe eine oder mehrere Di- oder Polyisocyanate i) mit mindestens einer Aminoverbindung ii) zu einer mit Isocyanatgruppen substituierten Harnstoffverbindung umgesetzt werden, das Umsetzungsprodukt in einer zweiten Stufe mit einer oder mehreren Hydroxyl-Aminoverbindungen iv) zu einer mit Anhydridgruppen reaktionsfähigen Harn stoffverbindung umgesetzt wird, die in einer dritten Stufe mit mindestens einem Säureanhydrid iii) zu einer sauer funktionalisierten Harnstoffverbindung umgesetzt wird; oder in einer ersten Stufe eine oder mehrere Di- oder Polyisocyanate i) mit einer oder mehreren Verbindungen mit Hydroxyl- oder Aminogruppen iv) zu einer mit Isocyanatgruppen substituierten Urethan- oder Harnstoffverbindung umgesetzt werden, das Umsetzungsprodukt in einer zweiten Stufe mit mindestens einer Aminoverbindung ii) zu einer mit Anhydridgruppen reaktionsfähigen Harnstoffverbindung umgesetzt wird, die in einer dritten Stufe mit mindestens einem Säureanhydrid iii) zu einer sauer funktionalisierten Harnstoffverbindung umgesetzt wird.

Gegenstand der vorliegenden Erfindung sind außerdem strahlungsempfindliche Gemische aus

(a) einem Harnstoff- und Carboxylgruppen enthaltenden Umsetzungsprodukt,

(b) mindestens einer ein- oder mehrfach ethylenisch ungesättigten Verbindung,

(c) gegebenenfalls einem Photoinitiator oder Photoinitiatorsystem,

sowie gegebenenfalls

(d) weiteren Zusatz- und Hilfsstoffen, das dadurch gekennzeichnet ist, daß als Komponente (a) ein Harnstoff- und Carboxylgruppen enthaltendes Umsetzungsprodukt verwendet wird, das durch Umsetzung von i) mindestens einem Di- oder Polyisocyanat

mit ii) mindestens einer Aminoverbindung der allgemeinen Formel (I)

$R'HN-R-XH$ (I),

wobei

R den zweiwertigen Rest eines, gegebenenfalls substituierten, Alkans, Arens, Ethers, Polyethers, Amins, Polyamins, Esters, Polyesters, Amids oder Polyamids,

$R'$ Wasserstoff, Alkyl, Aryl, Aralkyl, Hydroxyalkyl, Aminoalkyl, Mercaptoalkyl, Derivate derselben oder den einwertigen Rest $H\{O-(CH_2)_n-CHR''\}_m$ mit n = 1 bis 3, m = 1 bis 10 oder Isomere desselben und $R''$ = H oder $C_1$- bis $C_4$-Alkyl,

X O, S oder $NR'''$,

$R'''$ Wasserstoff, Alkyl, Aryl, Aralkyl, Hydroxyalkyl, Aminoalkyl, Mercaptoalkyl oder Derivate derselben

bedeuten, und/oder

mindestens einer Aminoverbindung der allgemeinen Formel (II)

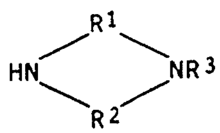

(II),

wobei

$R^1$ und $R^2$ untereinander gleich oder verschieden sind und den zweiwertigen Rest eines, gegebenenfalls substituierten, Alkans, Arens, Ethers, Polyethers, Amins, Polyamins, Esters, Polyesters, Amids oder Polyamids bedeuten,

$R^3$ Wasserstoff, Alkyl, Aryl, Aralkyl, Hydroxyalkyl, Aminoalkyl, Mercaptoalkyl oder Derivate derselben bedeutet

und

iii) mindestens einem Säureanhydrid einer mindestens zweiwertigen Carbonsäure,

sowie gegebenenfalls

iv) einer von Komponente ii) verschiedenen organischen Verbindung mit mindestens einer Hydroxylgruppe oder Aminogruppe, wobei die Aminogruppe am Stickstoff mindestens einen Wasserstoff trägt, mit der Maßgabe, daß die Summe der Anzahl der NCO- und Anhydridgruppen in i) und iii) kleiner oder gleich der Anzahl der damit reaktiven Gruppen in ii) und iv) ist, erhalten worden ist.

Insbesondere sind solche strahlungsempfindlichen Gemische Gegenstand der Erfindung, deren Löslichkeit in Wasser oder alkalischer wäßriger Lösung bei Bestrahlung zunimmt.

In diesen strahlungsempfindlichen Gemischen werden als Photoinitiatorsystem (c) vorzugsweise Benzophenon oder seine Derivate, Hexaarylbisimidazol-Derivate, N-Alkoxypyridiniumsalze oder Gemische dieser Verbindungen verwendet.

Als ethylenisch ungesättigte Verbindungen (b) werden vorzugsweise $\alpha,\beta$-ethylenisch ungesättigte Carbonylverbindungen, wie Acrylate oder Methacrylate eingesetzt.

Die Herstellung der erfindungsgemäßen Umsetzungsprodukte erfolgt in für die Herstellung von Harnstoff- bzw. Urethan-Harnstoffverbindungen bekannter Weise durch Addition der überschüssigen NH- bzw. OH-Gruppen der Komponenten ii) und gegebenenfalls iv) an die Isocyanatverbindung i), wobei die Anzahl gegenüber Isocyanat reaktiver Gruppen aus ii) und iv) bezüglich einer Isocyanatgruppe zwischen 1,01 und 6, bevorzugt 1,5 bis 4 betragen soll. Falls eine Verbindung iv) zugesetzt wird, kann die Isocyanatverbindung i) entweder gleichzeitig oder stufenweise, in beliebiger Reihenfolge, mit den Komponenten ii) und iv) umgesetzt werden. Im Anschluß werden die verbleibenden mit Anhydrid reaktiven Gruppen vollständig oder teilweise, bevorzugt jedoch 1 bis 4 dieser Gruppen, mit einer Anhydridgruppe der Komponente iii) zu den jeweiligen Carbonsäure-Verbindungen in ebenfalls bekannter Weise umgesetzt.

Zur besseren Handhabung der Produkte kann die Umsetzung zweckmäßigerweise in einem inerten Lösungsmittel durchgeführt werden. Hierfür sind insbesondere Lösungsmittel mit einem Siedepunkt von unter 150 °C/Normaldruck, wie Aceton, Methylethylketon, Ethylacetat, Butylacetat, Tetrahydrofuran, Toluol, Trichlorethan, etc., geeignet. Ebenfalls als Lösungsmittel geeignet sind die ethylenisch ungesättigten Verbindungen (b), sofern diese flüssig sind.

Die Reaktionstemperatur für die Umsetzung der Isocyanatgruppen liegt im allgemeinen zwischen 0 und 100 °C, vorzugsweise zwischen 20 und 70 °C.

Zur Beschleunigung der Umsetzung können Katalysatoren wie sie z.B. in Houben Weyl, Methoden der organischen Chemie, Bd. XIV/2, S. 60f, Georg Thieme-Verlag, Stuttgart (1963) bzw. Ullmann, Encyclopädie der technischen Chemie, Bd. 19, S. 306 (1981) beschrieben sind, eingesetzt werden. Bevorzugt sind zinnhaltige Verbindungen wie z.B. Dibutylzinndilaurat.

Im allgemeinen wird der Katalysator in einer Menge von 0,001 bis 2,5 Gew.%, bevorzugt von 0,005 bis 1,5 Gew.%, bezogen auf die Gesamtmenge der Reaktanden eingesetzt.

Zur Stabilisierung der strahlungsempfindlichen Gemische können auch 0,001 bis 2 Gew.%, vorzugsweise 0,005 bis 1,0 % Polymerisationsinhibitoren zugesetzt werden. Dabei handelt es sich um die üblichen, zur Verhinderung einer thermischen Polymerisation verwendeten Verbindungen, z.B. vom Typ des Hydrochinons, der Hydrochinonmonoalkylether, des 2,6-Di-t-butyl-phenols, der N-Nitrosoamine, der Phenothiazine oder Phosphorigsäureester.

Die so erhaltenen Produkte werden anschließend mit mindestens einer Anhydridverbindung iv) zu einer Carbonsäure-Verbindung umgesetzt. Dabei können die gegenüber Anhydrid reaktiven Gruppen in äquivalenter Menge oder im Überschuß eingesetzt werden. Bevorzugt werden Äquivalentverhältnisse zwischen 1 : 1 und 4 : 1. Zur Beschleunigung der Reaktion können Katalysatoren vom Lewis-Säure- bzw. Lewis-Base-Typ in Mengen von 0,01 bis 2 Gew.% zugesetzt werden. Bevorzugt sind 4-(N,N-Dimethylamino)pyridin und N-Methylimidazol. Die Reaktion kann zwischen 20 und 120 °C durchgeführt werden. Gegebenenfalls können Lösungsmittel zugesetzt werden.

Insbesondere für den Fall der lösungsmittelfreien Reaktionsführung kann das bei Raumtemperatur hochviskose bzw. feste Produkt vor dem Abkühlen verdünnt werden. Neben den bisher erwähnten Lösungsmitteln sind nach der Reaktion auch alkoholische Verdünner wie Methanol, Ethanol, Isopropanol, etc. geeignet.

Bezüglich der Aufbaukomponenten für die Herstellung der erfindungsgemäßen Umsetzungsprodukte und für ihren Einsatz in strahlungsempfindlichen Gemischen ist im einzelnen folgendes auszuführen.

Für die Umsetzung der Komponenten i) bis iv) kommen beispielsweise folgende Verbindungen in Frage:

Als Isocyanatkomponente i) sind alle Verbindungen geeignet, die mindestens zwei zur Reaktion mit Alkoholen oder primären bzw. sekundären Aminen befähigte Isocyanatgruppen enthalten. Besonders bevorzugt werden Diisocyanato-diphenylmethan, Diisocyanatotoluol (= Toluylendiisocyanat), Hexamethylendiisocyanat und Isophorondiisocyanat, sowie deren Oligomere vom Isocyanurat- und Biuret-Typ.

Als Aminoverbindungen ii) kommen solche der allgemeinen Formeln

$R'HN-R-XH$ (I)

(I) und/oder (II)

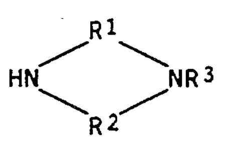

(II)

in Frage, wobei in der allgemeinen Formel (I)

$R'HN-R-XH$ (I)

R für den zweiwertigen Rest eines, gegebenenfalls substituierten, Alkans, beispielsweise mit 2 bis 10 Kohlenstoffatomen, wie $-(CH_2)_p-$mit p = 2 bis 10, $-CH_2-C(CH_3)_2-CH_2-$ oder $-CH(CH_3)-CH_2-$, eines Arens, beispielsweise Phenylen, eines substituierten Arens, beispielsweise $-(CH_2)_r-C_6H_3(OH)-$ mit r = 1 bis 6, vorzugsweise 2, eines Ethers, beispielsweise $-(CH_2-CHR^{IV}-O)_q-CH_2-CHR^{IV}-$ mit q = 1 bis 5, und $R^{IV}$ = H oder Alkyl mit 1 bis 4 Kohlenstoffatomen, eines Amins, beispielsweise mit 2 bis 20 Kohlenstoffatomen, wie z. B. $-(CH_2)_3-N(CH_3)-(CH_2)_3-$, eines Polyamins, beispielsweise $-(CH_2-CH_2-NH)_o-$ mit o = 2 bis 5, eines Esters, beispielsweise mit 4 bis 20 Kohlenstoffatomen, wie z.B. $-(CH_2)_2-COO-(CH_2)_s-$ mit s = 2 bis 6, $-CH_2-COO-CH_2-CH(CH_3)-$, oder eines Amids, beispielsweise mit 4 bis 20 Kohlenstoffatomen, wie z.B. $-(CH_2)_2-CONH-CH_2-$ oder $-(CH_2)_2-CONH-(CH_2)_5-NHOC-(CH_2)_2-$, ;

R' für Wasserstoff, Alkyl, beispielsweise mit 1 bis 30, vorzugsweise 1 bis 10 Kohlenstoffatomen, wie z. B. Methyl, Ethyl, Propyl, Butyl sowie Isomere davon, Cyclohexyl, Aryl, beispielsweise mit 6 bis 18 Kohlenstoffatomen, vorzugsweise Phenyl,

Aralkyl, beispielsweise mit 7 bis 20 Kohlenstoffatomen, z.B. Benzyl, 1-Methyl-3-phenylpropyl, 1-Phenylethyl,

Hydroxyalkyl, beispielsweise mit 2 bis 10 Kohlenstoffatomen, wie z.B. Hydroxyethyl, Hydroxypropyl, Hydroxybutyl,

Aminoalkyl, beispielsweise mit 2 bis 10 Kohlenstoffatomen, wie z.B. Aminoethyl, Aminopropyl, Dimethylaminobutyl, Dimethylaminoneopentyl, Mercaptoalkyl, beispielsweise mit 2 bis 10 Kohlenstoffatomen, wie z.B. Mercaptoethyl,

oder Derivate dieser Gruppen - wobei unter Derivaten im vorliegenden Falle mit Alkyl-, Halogen-, Nitro-, Nitril-, Carboxyl-, Ester-, Acyl-, OH-, Amino-, Sulfonsäure- oder Diazogruppen substituierte Gruppen der vorgenannten Art verstanden werden - oder den einwertigen Rest $H\{O-(CH_2)_n-CHR''\}_m$ mit n = 1 bis 3, m = 1 bis 10 oder Isomere dieses Rests und R'' = H oder $C_1$- bis $C_4$-Alkyl, wie er durch einfache Addition bzw. Polyaddition von cyclischen Ethern, z.B. Ethylenoxid, Propylenoxid oder Tetrahydrofuran erhältlich ist, z.B. Hydroxyethyloxyethyl;

X für O, S oder NR''', worin R''' für Wasserstoff, Alkyl, beispielsweise mit 1 bis 10 Kohlenstoffatomen, wie z.B. Methyl oder Ethyl, Aryl, beispielsweise Phenyl oder Naphthyl, Aralkyl, beispielsweise Benzyl oder Phenylethyl, Hydroxyalkyl, Aminoalkyl oder Mercaptoalkyl, wobei deren Alkylgruppen jeweils 1 bis 10 Kohlenstoffatome enthalten können, oder Derivate dieser Gruppen der unter R' genannten Art steht.

Beispiele für Verbindungen der allgemeinen Formel R'HN-R-XH sind Ethylendiamin, Butandiamin, Neopentandiamin, Polyoxypropylendiamine, Polyoxyethylendiamine, N-Ethylethylendiamin, Diethylentriamin, Monoisopropanolamin. Besonders bevorzugt werden Ethanolamin, Diethanolamin, Diisopropanolamin, Neopentanolamin, Ethylisopropanolamin, Butylethanolamin und 2-Mercaptoethylamin.

In der allgemeinen Formel (II)

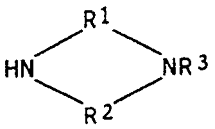

(II)

können $R^1$ und $R^2$ untereinander gleich oder verschieden sein und insbesondere den zweiwertigen Rest eines, gegebenenfalls substituierten, Alkans, beispielsweise mit 2 bis 4 Kohlenstoffatomen, z.B. $-(CH_2)_t-$ mit t = 1 bis 4, Arens, beispielsweise o-Phenylen, Ethers, beispielsweise mit 2 bis 4 Kohlenstoffatomen, z.B. $-CH_2-O-CH_2-$bedeuten;

$R^3$ kann für Wasserstoff, Alkyl, Aryl, Aralkyl, Hydroxyalkyl, Aminoalkyl, Mercaptoalkyl oder deren Derivate der unter R' genannten Art stehen. Bevorzugte Verbindungen der allgemeinen Formel (II) sind Piperazin und 1-(2-Hydroxyethyl)piperazin.

Desgleichen eignen sich auch Gemische der unter ii) genannten Aminoverbindungen.

Als Säureanhydride iii) kommen die Anhydride aller Verbindungen in Frage, die mindestens zwei Carbonsäure-Gruppen enthalten. Besonders bevorzugt werden zyklische Carbonsäureanhydride wie z.B. Phthalsäureanhydrid, Maleinsäureanhydrid, Trimellitsäureanhydrid, Pyromellitsäureanhydrid und das Anhydrid der Benzophenontetracarbonsäure.

Als gegebenenfalls mitzuverwendende, von Komponente ii) verschiedene Verbindungen mit mindestens einer Hydroxylgruppe oder Aminogruppe, wobei die Aminogruppe am Stickstoff mindestens einen Wasserstoff trägt, kommen alle von ii) verschiedenen Alkohole, primären und sekundären Amine in Frage. Bevorzugt werden monofunktionelle Alkohole oder Amine von Alkanen mit 1 bis 6 C-Atomen eingesetzt. Auch Polyalkohole können eingesetzt werden.

Die für die Herstellung des erfindungsgemäßen Umsetzungsproduktes verwendeten Verbindungen i) bis iv) werden so aufeinander abgestimmt, daß die daraus hergestellten erfindungsgemäßen Gemische in Wasser oder alkalischer wäßriger Lösung unlöslich sind. Die erfindungsgemäßen Umsetzungsprodukte können Säurezahlen bis 300, vorzugsweise 10 bis 200 mg KOH/g aufweisen. Das Molekulargewicht wird zweckmäßigerweise so gewählt, daß gute Filmbildungseigenschaften erhalten werden.

(b) Als ein- oder mehrfach ethylenisch ungesättigte Verbindungen eignen sich niedermolekulare oder oligomere Verbindungen mit mindestens einer ethylenischen Doppelbindung. Die Verbindungen werden so gewählt, daß sie mit der erfindungsgemäßen Harnstoffverbindung (a) verträglich sind. Bevorzugt werden $\alpha,\beta$-ungesättigte Carbonylverbindungen, wie z.B. Acrylate und Methacrylate. Die ethylenisch ungesättigten Verbindungen (b) sind in den erfindungsgemäßen strahlungsempfindlichen Gemischen bevorzugt in einer Menge von 0,1 bis 40 %, besonders bevorzugt zwischen 5 und 40 %, bezogen auf das Gesamtgewicht des strahlungsempfindlichen Gemisches, enthalten.

(c) Als gegebenenfalls mitzuverwendende Photoinitiatoren für das erfindungsgemäße strahlungsempfindliche Gemisch kommen die für lichtempfindliche, photopolymerisierbare Aufzeichnungsmaterialien üblichen und an sich bekannten Photoinitiatoren bzw. Photoinitiatorsysteme in Betracht. Beispielhaft seien hierfür genannt: Benzoin, Benzoinether, insbesondere Benzoinalkylether, substituierte Benzoine, Alkylether von substituierten Benzoinen, wie z.B. $\alpha$-Methylbenzoinalkylether oder $\alpha$-Hydroxymethylbenzoinalkylether; Benzile, Benzilketale, insbesondere Benzildimethylketal, Benzilmethylethylketal oder Benzilmethylbenzylketal; die als Photoinitiator bekannten und wirksamen Acylphosphinoxid-Verbindungen, wie z.B. 2,4,6-Trimethylbenzoyldiarylphosphinoxid; Benzophenon, Derivate des Benzophenons, 4,4'-Dimethylaminobenzophenon, Derivate von Michler's Keton; Anthrachinon und substituierte Anthrachinone; arylsubstituierte Imidazole oder deren Derivate, wie z.B. 2,4,5-Triarylimidazoldimere; Thioxanthonderivate, die als Photoinitiatoren wirksamen Acridin- oder Phenacin-Derivate und N-Alkoxypyridiniumsalze und deren Derivate. Geeignete Photoinitiatoren sind auch Diazoniumsalze, wie z.B. p-Phenylaminobenzoldiazonium-hexafluorophosphat, Iodoniumsalze, wie z.B. Diphenyliodoniumtetrafluoroborat, oder Sulfoniumsalze, wie z.B. Triphenylsulfoniumhexafluoroarsenat. Beispiele für Initiatorsysteme sind Kombinationen der genannten Initiatoren mit Sensibilisierungshilfsmitteln oder Aktivatoren, wie insbesondere tertiären Aminen. Typische Beispiele für solche Initiatorsysteme sind Kombinationen aus Benzophenon oder Benzophenon-Derivaten mit tertiären Aminen, wie Triethanolamin oder Michlers Keton; oder Gemische aus 2,4,5-Triarylimidazol-Dimeren und Michler's Keton oder den Leukobasen von Triphenylmethanfarbstoffen. Die Auswahl der geeigneten Photoinitiatoren bzw. Photoinitiator-Systeme ist dem Fachmann geläufig. Besonders bevorzugte Photoinitiatoren sind Michlers Keton, Benzophenon, Hexaarylbisimidazol-Derivate und N-Alkoxypyridinium-Salze. Auch Mischungen der genannten Photoinitiatoren eignen sich sehr gut. Die Photoinitiatoren bzw. Photoinitiatorsysteme sind in der lichtempfindlichen Aufzeichnungsschicht im allgemeinen in Mengen von 0,1 bis 10 Gew.%, bezogen auf das strahlungsempfindliche Gemisch, enthalten.

Besonders bevorzugte Photoinitiatoren sind Michlers Keton, Benzophenon, Hexaarylbisimidazol-Derivate und N-Alkoxypyridinium-Salze. Auch Mischungen der genannten Photoinitiatoren eignen sich sehr gut.

(d) Als weitere Zusatz- und/oder Hilfsstoffe (d), die in dem erfindungsgemäßen strahlungsempfindlichen Gemisch enthalten sein können, kommen z.B. Farbstoffe und/oder Pigmente, photochrome Verbindungen bzw. Systeme, sensitometrische Regler, Weichmacher, Verlaufshilfsmittel, Mattierungs- oder Gleitmittel, basische Komponenten und dergleichen in Betracht. Beispiele für Farbstoffe und/oder Pigmente, die sowohl als Kontrastmittel als auch schichtverfestigend wirken können, sind u.a. Brilliant Green Dye (C.I. 42 040), Viktoria-Reinblau FGA, Viktoria-Reinblau 80 (C.I. 42 595), Viktoria-Blau B (C.I. 44 045), Rhodamin 6 G (C.I. 45 160), Triphenylmethanfarbstoffe, Naphthalimidfarbstoffe und 3′-Phenyl-7-dimethylamino-2,2′-spiro-di-(2H-1-benzopyran). Photochrome oder Farbumschlag-Systeme, die bei Belichtung mit aktinischem Licht reversibel oder irreversibel ihre Farbe ändern, ohne hierbei den Photopolymerisationsprozeß zu stören, sind z.B. Leukofarbstoffe zusammen mit geeigneten Aktivatoren. Als Beispiele für Leukofarbstoffe seien die Leukobasen der Triphenylmethanfarbstoffe, wie Kristallviolett-Leukobase und Malachitgrün-Leukobase, Leuko-Basisch blau, Leuko-Pararosanilin, Leuko-Patentblau A oder V genannt; ferner kommt auch Rhodamin B-Base in Betracht. Als Aktivatoren für diese photochromen Verbindungen kommen u.a. organische Halogenverbindungen, die bei Belichtung mit aktinischem Licht Halogenradikale abspalten, oder Hexaarylbisimidazole in Betracht. Geeignete Farbumschlagsysteme sind auch in DE-A-38 24 551 beschrieben. Besonders geeignete Farbumschlagsysteme sind solche, bei denen die Farbintensität bei Belichtung geringer wird, wie z.B. Sudanfarbstoffe, Polymethinfarbstoffe oder Azofarbstoffe in Kombination mit geeigneten Photoinitiatoren. Zu den sensitometrischen Reglern gehören Verbindungen wie z.B. 9-Nitroanthracen, 10,10′-Bisanthron, Phenazinium-, Phenoxazinium-, Acridinium- oder Phenothiazinium-Farbstoffe, insbesondere in Kombination mit milden Reduktionsmitteln, 1,3-Dinitrobenzole und ähnliche. Als Weichmacher können die an sich bekannten und üblichen niedermolekularen oder hochmolekularen Ester, wie Phthalate oder Adipate, Toluolsulfonamid oder Tricresylphosphat, dienen. Als basische Komponenten kommen Zusätze von Aminen, insbesondere tertiären Aminen, z.B. Triethylamin oder Triethanolamin, oder Alkali- oder Erdalkalihydroxide und -carbonate in Betracht. Die Zusatz- und/ oder Hilfsstoffe sind im strahlungsempfindlichen Gemisch in den für diese Stoffe üblichen und bekannten wirksamen Mengen vorhanden. Ihre Menge sollte jedoch im allgemeinen 30 Gew.%, vorzugsweise 20 Gew.%, bezogen auf das strahlungsempfindliche Gemisch, nicht überschreiten.

In vielen Fällen hat es sich als zweckmäßig erwiesen, den erfindungsgemäßen strahlungsempfindlichen Materialien saure Polymere zuzusetzen, wie z.B. teilveresterte Styrol-Maleinsäureanhydrid-Copolymere, Copolymere aus Styrol, Methylmethacrylat, Ethylacrylat und Methacrylsäure oder Copolymere aus Methylmethacrylat, Ethylhexylacrylat und Acrylsäure oder Methacrylsäure. Solche sauren Polymere werden dem strahlungsempfindlichen Gemisch bevorzugt in einer Konzentration von 1 - 40 Gew.%, besonders bevorzugt in einer Konzentration von 5 - 30 Gew.%, bezogen auf das Gesamtgewicht des strahlungsempfindlichen Materials, zugesetzt.

Eine Folie oder Beschichtung kann hergestellt werden, indem das oben beschriebene strahlungsempfindliche Gemisch in einem Lösemittel gelöst wird, und die erhaltene Lösung dann durch Gießen, gegebenenfalls mit Hilfe eines Rakels, Aufschleudern, Roller-Coating oder andere Auftragsverfahren auf einen permanenten oder temporären Träger aufgebracht wird.

Geeignete Lösemittel sind z. B. aromatische Kohlenwasserstoffe, niedermolekulare Ketone, Alkohole, Ether, Ester und Chlorkohlenwasserstoffe.

Als Träger für die erfindungsgemäßen strahlungsempfindlichen Beschichtungen kann praktisch jedes auf dem Drucksektor und bei der Herstellung von Leiterplatten für die Elektronikindustrie gebräuchliche Material eingesetzt werden. Eine wichtige Bedingung ist jedoch, daß der Träger inert ist, d.h. nicht mit dem zur Herstellung der Beschichtung verwendeten strahlungsempfindlichen Gemisch reagiert.

Solche Trägermaterialien sind z.B. Stahl, Aluminiumlegierungen, mechanisch, chemisch oder elektrochemisch aufgerauhtes Aluminium, Silicium, Polyester und andere Kunststoffe. Die Schichtdicke kann dabei in weiten Grenzen variieren. Sie wird z.B. bei der Verwendung des strahlungsempfindlichen Gemisches als Hochdruck- oder Tiefdrckplatte typischerweise zwischen 50 und 500 µm, bei der Verwendung als Photoresist für die Herstellung gedruckter Schaltungen zwischen 20 und 100 µm und bei der Verwendung als Photoresist zur Strukturierung von Halbleitermaterialien zwischen 0,3 und 5 µm betragen. Wird das erfindungsgemäße strahlungsempfindliche Gemisch als Offsetdruckplatte verwendet, wird man die Beschichtung so vornehmen, daß Trockenschichtgewichte von 0,5 - 5 g/qm erhalten werden.

Die erfindungsgemäßen strahlungsempfindlichen Gemische eignen sich in vorteilhafter Weise für die Herstellung von Druckformen oder Resistmustern nach den hierfür an sich bekannten und üblichen Verfahren. Hierzu wird die lichtempfindliche Aufzeichnungsschicht - bei Photoresistfilmen und Schichtübertragungsmaterialien nach der Schichtübertragung auf das zu schützende Substrat - bildmäßig mit aktinischem Licht belichtet, wobei sich hierfür die üblichen Lichtquellen von aktinischem Licht, wie beispielsweise UV-Fluoreszenzröhren, Quecksilberhoch-, -mittel- oder -niederdruckstrahler, superaktinische Leuchtstoffröhren, Xenon-Impulslampen, aber auch UV-Laser, Argonlaser und ähnliche, eignen. Die von den Lichtquellen emittierte Wellenlänge soll im allgemeinen zwischen 230 und 450 nm, bevorzugt zwischen 300 und 420 nm, liegen und insbesondere auf die Eigenabsorption des in der photopolymerisierbaren Aufzeichnungsschicht enthaltenen Photoinitiators abgestimmt sein.

Nach der bildmäßigen Belichtung wird die Druckform bzw. das Resistmuster durch Auswaschen der belichteten Bereiche der Aufzeichnungsschicht mit Wasser oder vorzugsweise einer wäßrig-alkalischen Entwicklerlösung entwickelt. Das Entwickeln kann durch Waschen, Sprühen, Reiben, Bürsten etc. erfolgen. Die erfindungsgemäßen Aufzeichnungselemente zeigen dabei einen großen Entwicklungsspielraum und eine sehr geringe Überwaschempfindlichkeit. Als Entwicklerlösungen kommen wäßrig-alkalische Lösungen in Betracht, die zur Einstellung des günstigsten pH-Wertes, im allgemeinen im Bereich von 8 bis 14, vorzugsweise im Bereich von etwa 9 bis 13, alkalisch reagierende Substanzen, wie z.B. Borax, Dinatriumhydrogenphosphat, Soda, Alkalihydroxide oder organische Basen, wie Di- oder Triethanolamin in Wasser gelöst, enthalten. Die wäßrig-alkalischen Entwicklerlösungen können auch Puffersalze, z.B. wasserlösliche Alkaliphosphate, -silikate, -borate, -acetate oder -benzoate enthalten. Als weitere Bestandteile der Entwicklerlösungen können Netzmittel, vorzugsweise anionische Netzmittel, und gegebenenfalls wasserlösliche Polymere, wie z.B. Natriumcarboxymethylcellulose, Polyvinylalkohol, Polynatriumacrylat und dergleichen, mitverwendet werden. Obwohl die erfindungsgemäßen Aufzeichnungselemente im allgemeinen mit Wasser bzw. wäßrig-alkalischen Entwicklerlösungen ausgewaschen werden, ist es selbstverständlich grundsätzlich möglich, wenn auch nicht erforderlich, daß die Entwicklerlösungen auch noch geringe Zusätze an wasserlöslichen organischen Lösungsmitteln, wie z.B. aliphatischen Alkoholen, Aceton oder Tetrahydrofuran, enthalten.

Die erfindungsgemäßen strahlungsempfindlichen Gemische können z.B. durch energiereiche Strahlung wie Elektronen- oder Röntgenstrahlung strukturiert werden, wobei sie sich durch eine sehr hohe Strahlungsempfindlichkeit auszeichnen. In dieser Verwendung kann man im allgemeinen auf den Zusatz eines eigenen Initiatorsystems verzichten. Will man die erfindungsgemäßen Gemische hingegen durch sichtbares oder UV-Licht strukturieren, wie es bei der Herstellung von Druckplatten und Photoresisten üblich ist, wird man geeignete Photoinitiatoren zusetzen, deren spektrale Empfindlichkeit auf die Emission der verwendeten Lichtquelle abgestimmt ist.

Die erfindungsgemäßen strahlungsempfindlichen Gemische zeichnen sich durch eine für positiv arbeitende Systeme sehr hohe Lichtempfindlichkeit aus, die der Lichtempfindlichkeit handelsüblicher Negativsysteme vergleichbarer Schichtdicke entspricht. Diese hohe Lichtempfindlichkeit wird erreicht, ohne daß zusätzliche Verfahrensschritte z.B. die bei vielen anderen Positivsystemen notwendige thermische Nachbehandlung erforderlich wären. Auch die eingesetzten Entwicklerlösungen entsprechen den bei negativ arbeitenden Schichten eingesetzten, so daß vollkommene Kompatibilität der erfindungsgemäßen Aufzeichnungsschichten mit herkömmlichen Systemen besteht. Die erfindungsgemäßen strahlungsempfindlichen Aufzeichnungsschichten eignen sich gut für Mehrfachbelichtungen. Dadurch können bei vielen Anwendungen Verfahrensschritte eingespart werden. Mehrfachbelichtungen sind bei allen photopolymerisierbaren Systemen, aber auch bei vielen Positivsystemen aus prinzipiellen Gründen nicht möglich. Die erfindungsgemäßen strahlungsempfindlichen Gemische weisen weiter die interessante Eigenschaft auf, daß sie zwar bei kurzen Bestrahlungszeiten als Positivsysteme arbeiten, bei längeren Bestrahlungszeiten jedoch als vernetzbare Systeme angesehen werden können. Dieser Effekt tritt insbesondere dann auf, wenn in dem strahlungsempfindlichen Gemisch die ein- oder mehrfach ethylenisch ungesättigten Verbindungen b) in einer Menge von $> 5$ Gew.% vorhanden sind. Diese Eigenschaft kann ausgenützt werden, um nach einem ersten, bildmäßigen Belichtungsschritt mit kurzer Belichtungszeit und nach Entfernung der belichteten Bereiche in einer Entwicklerlösung in einem zweiten, nicht notwendigerweise bildmäßigen Belichtungsschritt mit deutlich höherer Belichtungszeit eine Vernetzung auszulösen. Auf diese Weise können die mechanischen Eigenschaften, z.B. von Druckplatten, verbessert werden.

Die Erfindung wird durch die nachstehenden Beispiele näher erläutert.

Die in der Herstellvorschrift und in den Beispielen genannten Teile und Prozente sind, soweit nicht anders angegeben, Gewichtsteile bzw. Gewichtsprozente.

Herstellung der erfindungsgemäßen Umsetzungsprodukte

Herstellvorschrift

In eine Vorlage mit 222 g Isophorondiisocyanat (1 Mol), 148 g Methylethylketon und 0,1 g Dibutylzinndilaurat werden innerhalb 45 Minuten bei 20 bis 25° C, gegebenenfalls unter Eiskühlung, eine Mischung von 129 g Diisobutylamin (1 Mol), 133 g Diisopropanolamin und 112 g Methylethylketon zugetropft. Danach wird die Temperatur auf 80° C erhöht, 148 g Phthalsäureanhydrid (1 Mol) sowie 3,1 g N-Methylimidazol zugegeben und weitere 6 Stunden bei 80° C erhitzt.

Verwendung in strahlungsempfindlichen Gemischen

Beispiel 1

10 g des nach obiger Herstellvorschrift hergestellten Umsetzungsprodukts, 2,5 g Butylacrylat, 700 mg N-Methoxypicolinium-tosylat und 15 mg Michler's Keton wurden in 8 g Methylethylketon gelöst und so auf eine 23 µm starke Polyethylenterephthalatfolie gegossen, daß die photoempfindliche Schicht nach dem Trocknen eine Stärke von 40 µm aufwies. Die Schicht wurde zur Aufbewahrung mit einer 30 µm starken PE-Folie abgedeckt. Zur Prüfung wurde die PE-Folie abgezogen, der Verbund aus Polyethylenterephthalaffolie und photoempfindlicher Schicht mit der photoempfindlichen Schicht zum Kupfer auf ein kupferkaschiertes Leiterplattensubstrat laminiert und auf einem Riston®-PC-Printer mit 150 mJ/cm² belichtet. Nach dem Abziehen der Poly ethylenterephthalatfolie wurde in einem Sprühwascher 30 Sekunden mit 1 %iger Sodalösung von 30° C entwickelt, wobei sich die belichteten Teile der lichtempfindlichen Schicht vollkommen entfernen ließen. Die unbelichteten Teile blieben unverändert.

Beispiel 2

Wie in Beispiel 1 wurden 9 g des nach obiger Herstellvorschrift erhaltenen Produkts und 1 g Ethylhexylacrylat in 8 g Methylethylketon gelöst und mit 300 mg Benzophenon und 15 mg Michler's Keton versetzt. Aus der Lösung wurden wie in Beispiel 1 Schichten von 40 µm Stärke gegossen. Die Schichten wurden auf kupferkaschierte Leiterplattensubstrate laminiert und in einem Riston-PC-Printer mit 100 mJ/cm² belichtet. Die belichteten Stellen ließen sich in 35 Sekunden mit 1 %iger Sodalösung auswaschen, ohne daß auf dem Kupfer Rückstände zurückblieben.

**Ansprüche**

1. Harnstoff- und Carboxylgruppen enthaltendes Umsetzungsprodukt, dadurch gekennzeichnet, daß es durch Umsetzung von
i) mindestens einem Di- oder Polyisocyanat
mit
ii) mindestens einer Aminoverbindung der allgemeinen Formel (I)
$R'HN-R-XH$ (I),
wobei
R den zweiwertigen Rest eines, gegebenenfalls substituierten, Alkans, Arens, Ethers, Polyethers, Amins, Polyamins, Esters, Polyesters, Amids oder Polyamids
R' Wasserstoff, Alkyl, Aryl, Aralkyl, Hydroxyalkyl, Aminoalkyl, Mercaptoalkyl, Derivate derselben oder den einwertigen Rest $H\{O-(CH_2)_n-CHR''\}_m$ mit n = 1 bis 3, m = 1 bis 10 oder Isomere desselben und $R''$ = H oder $C_1$- bis $C_4$-Alkyl,
X O, S oder NR''',
R''' Wasserstoff, Alkyl, Aryl, Aralkyl, Hydroxyalkyl, Aminoalkyl, Mercaptoalkyl oder Derivate derselben bedeuten, und/oder
mindestens einer Aminoverbindung der allgemeinen Formel (II)

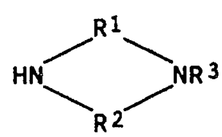

(II),

wobei
$R^1$ und $R^2$ untereinander gleich oder verschieden sind und den zweiwertigen Rest eines, gegebenenfalls substituierten, Alkans, Arens, Ethers, Polyethers, Amins, Polyamins, Esters, Polyesters, Amids oder Polyamids bedeuten,
$R^3$ Wasserstoff, Alkyl, Aryl, Aralkyl, Hydroxyalkyl, Aminoalkyl, Mercaptoalkyl oder Derivate derselben bedeutet
und
iii) mindestens einem Säureanhydrid einer mindestens zweiwertigen Carbonsäure,
sowie gegebenenfalls
iv) einer von Komponente ii) verschiedenen organischen Verbindung mit mindestens einer Hydroxylgruppe oder Aminogruppe, wobei die Aminogruppe am Stickstoff mindestens einen Wasserstoff trägt,
mit der Maßgabe, daß die Summe der Anzahl der NCO- und Anhydridgruppen in i) und iii) kleiner oder gleich der Anzahl der damit reaktiven Gruppen in ii) und iv) ist und für den Fall, daß in der allgemeinen Formel (I) der Komponente ii) X für O steht, mindestens eine Verbindung der Komponente iv) mitverwendet wird,
erhalten worden ist.

2. Umsetzungsprodukt nach Anspruch 1, dadurch gekennzeichnet, daß als Komponente iv) ein Monoalkohol oder ein primäres oder sekundäres Monoamin eingesetzt wird.

3. Umsetzungsprodukt nach Anspruch 1, dadurch gekennzeichnet, daß als Komponente i) ein Diisocyanat eingesetzt wird.

4. Umsetzungsprodukt nach Anspruch 1, dadurch gekennzeichnet, daß als Komponente ii) ein oder mehrere Hydroxyalkylamine eingesetzt werden.

5. Umsetzungsprodukt nach einem der vorhergehenden Ansprüche, dadurch gekennzeichnet, daß als Komponente iii) ein zyklisches Carbonsäureanhydrid eingesetzt wird.

6. Verfahren zur Herstellung eines Umsetzungsprodukts nach Anspruch 1, dadurch gekennzeichnet, daß in einer ersten Stufe ein oder mehrere Di- oder Polyisocyanate i) mit mindestens einer Aminoverbindung ii) und gegebenenfalls gleichzeitig mit einer Verbindung mit mindestens einer Hydroxylgruppe oder Aminogruppe iv) zu einer mit Anhydridgruppen reaktionsfähigen Harnstoffverbindung umgesetzt werden, die in einer zweiten Stufe mit mindestens einem Säureanhydrid iii) zu einer sauer funktionalisierten Harnstoffverbindung umgesetzt wird.

7. Verfahren zur Herstellung eines Umsetzungsprodukts nach Anspruch 1, dadurch gekennzeichnet, daß in einer ersten Stufe eine oder mehrere Di- oder Polyisocyanate i) mit mindestens einer Aminoverbindung ii) zu einer mit Isocyanatgruppen substituierten Harnstoffverbindung umgesetzt werden, das Umsetzungsprodukt in einer zweiten Stufe mit einer oder mehreren Hydroxyl- oder Aminoverbindungen iv) zu einer mit Anhydridgruppen reaktionsfähigen Harnstoffverbindung umgesetzt wird, die in einer dritten Stufe mit mindestens einem Säureanhydrid iii) zu einer sauer funktionalisierten Harnstoff- oder Urethan-Harnstoffverbindung umgesetzt wird.

8. Verfahren zur Herstellung eines Umsetzungsproduktes nach Anspruch 1, dadurch gekennzeichnet, daß in einer ersten Stufe eine oder mehrere Di- oder Polyisocyanate i) mit einer oder mehreren Verbindungen mit Hydroxyl- oder Aminogruppen iv) zu einer mit Isocyanatgruppen substituierten Urethan- oder Harnstoffverbindung umgesetzt werden, das Umsetzungsprodukt in einer zweiten Stufe mit mindestens einer Aminoverbindung ii) zu einer mit Anhydridgruppen reaktionsfähigen Harnstoffverbindung umgesetzt wird, die in einer dritten Stufe mit mindestens einem Säureanhydrid iii) zu einer sauer funktionalisierten Harnstoffverbindung umgesetzt wird.

9. Strahlungsempfindliches Gemisch aus

(a) einem Harnstoff- und Carboxylgruppen enthaltenden Umsetzungsprodukt,

(b) mindestens einer ein- oder mehrfach ethylenisch ungesättigten Verbindung,

(c) gegebenenfalls einem Photoinitiator oder Photoinitiatorsystem, sowie

(d) gegebenenfalls weiteren Zusatz- und Hilfsstoffen,

dadurch gekennzeichnet, daß als Komponente (a) ein Harnstoff- und Carboxylgruppen enthaltendes Umsetzungsprodukt verwendet wird, das durch Umsetzung von

i) mindestens einem Di- oder Polyisocyanat

mit

ii) mindestens einer Aminoverbindung der allgemeinen Formel (I)

$R'HN-R-XH$ (I),

wobei

R den zweiwertigen Rest eines, gegebenenfalls substituierten, Alkans, Arens, Ethers, Polyethers, Amins, Polyamins, Esters, Polyesters, Amids oder Polyamids,

$R'$ Wasserstoff, Alkyl, Aryl, Aralkyl, Hydroxyalkyl, Aminoalkyl, Mercaptoalkyl, Derivate derselben oder den einwertigen Rest $H\{O-(CH_2)_n-CHR''\}_m$ mit $n = 1$ bis 3, $m = 1$ bis 10 oder Isomere desselben und $R'' = H$ oder $C_1$- bis $C_4$-Alkyl,

X O, S oder $NR'''$,

$R'''$ Wasserstoff, Alkyl, Aryl, Aralkyl, Hydroxyalkyl, Aminoalkyl, Mercaptoalkyl oder Derivate derselben bedeuten, und/oder

mindestens einer Aminoverbindung der allgemeinen Formel (II)

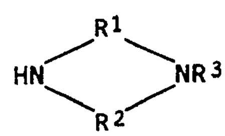

(II),

wobei

$R^1$ und $R^2$ untereinander gleich oder verschieden sind und den zweiwertigen Rest eines, gegebenenfalls substituierten, Alkans, Arens, Ethers, Polyethers, Amins, Polyamins, Esters, Polyesters, Amids oder Polyamids bedeuten,

$R^3$ Wasserstoff, Alkyl, Aryl, Aralkyl, Hydroxyalkyl, Aminoalkyl, Mercaptoalkyl oder Derivate derselben bedeutet

und

iii) mindestens einem Säureanhydrid einer mindestens zweiwertigen Carbonsäure,

sowie gegebenenfalls

iv) einer von Komponente ii) verschiedenen organischen Verbindung mit mindestens einer Hydroxylgruppe oder Aminogruppe, wobei die Aminogruppe am Stickstoff mindestens einen Wasserstoff trägt,

mit der Maßgabe, daß die Summe der Anzahl der NCO- und Anhydridgruppen in i) und iii) kleiner oder gleich der Anzahl der damit reaktiven Gruppen in ii) und iv) ist, erhalten worden ist.

10. Strahlungsempfindliches Gemisch nach Anspruch 9, dadurch gekennzeichnet, daß seine Löslichkeit in Wasser oder wäßrig-alkalischer Lösung bei Bestrahlung zunimmt.

11. Strahlungsempfindliches Gemisch nach Anspruch 9 oder 10, dadurch gekennzeichnet, daß als Photoinitiatorsystem (c) Benzophenon oder seine Derivate, Hexaarylbisimidazol-Derivate, N-Alkoxypyridinumsalze oder Gemische dieser Verbindungen verwendet werden.

12. Strahlungsempfindliches Gemisch nach einem der Ansprüche 9 bis 11, dadurch gekennzeichnet, daß als ethylenisch ungesättigte Verbindung eine $\alpha,\beta$-ethylenisch ungesättigte Carbonylverbindung eingesetzt wird.

13. Strahlungsempfindliches Gemisch nach einem der Ansprüche 9 bis 12, dadurch gekennzeichnet, daß als ethylenisch ungesättigte Verbindung ein Acrylat oder Methacrylat verwendet wird.